# EUROPEAN PATENT APPLICATION

(11) **EP 1 715 673 A1**
(43) Date of publication of application: **25.10.2006**
(21) Application number: 05710200.6
(22) Date of filing: 08.02.2005
(51) Int. Cl.: H04N 1/387, B41J 29/00, B41J 29/38, G06F 3/12, G06T 1/00

(54) **ADDITIONAL INFORMATION PROCESSING DEVICE, ADDITIONAL INFORMATION PROCESSING SYSTEM, AND ADDITIONAL INFORMATION PROCESSING METHOD**

(30) Priority: 10.02.2004 JP 2004033326
(71) Applicant: Oki Electric Industry Company, Limited, Tokyo 105-8460 (JP)
(72) Inventor: ENDO, Kinya, Oki Electric Industry Co. Ltd, Tokyo 1058460 (JP); TSUKAMOTO, Akitoshi, Oki Electric Industry Co. Ltd, Tokyo 1058460 (JP); HIKIMA, Toshio, Oki Electric Industry Co. Ltd, Tokyo 1058460 (JP)
(74) Representative: Kirschner, Klaus Dieter
(86) International application number: PCT/JP2005/002199
(87) International publication number: WO 2005/076591

(57) **Abstract**

Disclosed is an additional information processing apparatus (10) capable of easily limiting the allowable number of times a content file such as a confidential document can be copied, or capable of easily enabling to check a record of copy events to trace back the copy events. The additional information processing apparatus (10) includes an image acquisition component (2) which acquires input image data in which additional information is embedded; and an extracting component (20) which extracts the additional information from the input image data; and an additional information modification component (24) which generates new additional information by modifying the additional information when determining that the additional information complies with a predetermined condition, and generates copied image data by embedding the new additional information into the input image data or image data obtained by removing the additional information from the input image data.

## Description

### Technical Field

The present invention relates to an apparatus, system and method for embedding confidential information into electronic data stored in an electronic medium or into a printed medium, and more particularly to an apparatus, system and method for generating digital watermark information and embedding the generated digital watermark information into a medium such as a printed medium.

### Background Art

Illegal copying of content files such as digital media or printed media has been a problem for recent years. For example, there are problems of the illegal copying and unauthorized uses of highly confidential printed documents such as documents for internal use only, printed media of high monetary value such as tickets or cash vouchers, or copyrighted works such as maps produced by companies. One reason for the illegal copying seems to be that digital multifunctional devices of high accuracy and the like are widely deployed at low price, thereby allowing anyone to be able to easily produce copies that are visually the same as original contents.

In order to prevent the illegal copying of content files to protect the contents, digital watermarking technologies for embedding additional information such as an identification code into the content files and for detecting the additional information embedded in the content files have been developed. Digital watermark can be commonly defined as "information that is information other than that of a content file itself, and that is to be embedded into the content file such as a still image, moving image or audio file in consideration of characteristics of vision in human eyes and without degrading the feature of the content file". The digital watermark is embedded and integrated into the content file, thus enabling to prevent falsification of the content file and to prevent systematic removal of the digital watermark from the content file. Technologies for preventing the illegal copying by using the digital watermark are disclosed, for example, in Patent Document 1 (Japanese Patent Application Publication (KOKAI) No. 2001-189842) and Patent Document 2 (Japanese Patent Application Publication (KOKAI) No. 2003-143391).

However, there are problems with the conventional digital watermarking technologies. The problem is difficulty in limiting the number of times the content file is allowed to be copied, and another problem is difficulty in specifying the person who makes the copying or the machine used for the copying. For example, the conventional digital watermarking technologies cannot deal with the case of a requirement for permitting to copy an original document that exists as a confidential document, and limiting the number of times of the copying. Further, it is difficult to record a history list of persons who has copied the confidential document, or to record a history list of machines used for copying the confidential documents. Therefore, when the contents of the confidential document are leaked, it is not easy to identify the person who leaked or the place where the leak occurred.

### Disclosure of Invention

In view of the foregoing, it is an object of the present invention to provide an additional information processing apparatus, an additional information processing system, and an additional information processing method which are capable of easily limiting the allowable number of times a content file such as a confidential document can be copied, or capable of easily enabling to check a record of copy events to trace back its copy history.

In order to achieve the above object, according to a first aspect of the present invention, there is provided an additional information processing apparatus which comprises: an image acquisition component which acquires input image data in which additional information is embedded; an extracting component which extracts the additional information from the input image data; and an additional information modification component which generates new additional information by modifying the additional information when determining that the additional information complies with a predetermined condition, and generates copied image data by embedding the new additional information into the input image data or image data obtained by removing the additional information from the input image data.

According to a second aspect of the present invention, there is provided an additional information processing system which comprises: the additional information processing apparatus according to the first aspect of the present invention; a scanner which obtains the input image data by optically scanning a printed medium in which the additional information is embedded; and a printer which prints out the copied image data.

According to a third aspect of the present invention, there is provided an additional information processing system which comprises the additional information processing apparatus according to the first aspect of the present invention. The additional information can contain copy control information for limiting the allowable number of times the input image data is copied. When determining that the copy control information contains a variable value representing permission to copy the input image data, the additional information modification component can generate the new additional information by modifying the variable value and generates the copied image data. The additional information modification component can generate the new additional information by adding personal identification information of a user to the additional information. The additional information processing system according to the third aspect of the present invention further comprises an information reading unit which reads personal identification information from a recording medium storing the personal identification information of a user, and provides the read personal identification information to the additional information processing apparatus.

According to a fourth aspect of the present invention, there is provided an additional information processing system which comprises an additional information processing apparatus according to the first aspect of the present invention. The additional information can contain copy control information for limiting the allowable number of times the input image data is copied. When determining that the copy control information contains a variable value representing permission to copy the input image data, the additional information modification component can generate the new additional information by modifying the variable value and generates the copied image data. The additional information modification component can modify the variable value by a smaller amount with a higher level of access authorization of a user, and can modify the variable value by a larger amount with a lower level of the access authorization level of a user. Alternatively, when determining that the level of the access authorization of a user is equal to or larger than a predetermined level, the additional information modification component can provide the copied image data having the same additional information as that of the input image data, without generating the new additional information. The additional information processing system according to the fourth aspect of the present invention further comprises an information reading unit which reads access authorization from a recording medium storing the access authorization of a user, and provides the read access authorization to the additional information processing apparatus.

According to a fifth aspect of the present invention, there is provided an additional information processing method which comprises the steps of: (a) acquiring input image data in which additional information is embedded; (b) extracting the additional information from the input image data; (c) determining whether or not the extracted additional information complies with a predetermined condition; and (d) generating new additional information by modifying the additional information when it is determined in the step (c) that the additional information complies with the predetermined condition, and generating copied image data by embedding the new additional information into the input image data or image data obtained by removing the additional information from the input image data.

Further features of the invention, its nature and various advantages will be more apparent from the accompanying drawings and the following detailed

### description of the preferred embodiments.

### Brief Description of the Drawings

Fig. 1 is a block diagram schematically showing a configuration of a digital multifunctional device according to one embodiment of the present invention;
Fig. 2 is a block diagram schematically showing a configuration of a watermark information processing unit integrated in the digital multifunctional device;
Fig. 3 schematically illustrates an example of watermarked image data;
Fig. 4 schematically illustrates original image data obtained by removing a watermark pattern from the watermarked image data shown in Fig. 3;
Fig. 5 is a flowchart schematically showing a procedure of a watermark generation process according to a first embodiment of the present invention;
Fig. 6 schematically illustrates the watermark pattern;
Fig. 7 illustrates a procedure of superimposing the watermark pattern on the original image data;
Fig. 8. is a flowchart schematically showing a procedure of a watermark generation process according to a second embodiment of the present invention;
Fig. 9 schematically illustrates an example of watermarked image data;
Fig. 10 is a flowchart schematically showing a procedure of a watermark generation process according to a third embodiment of the present invention;
Fig. 11 schematically illustrates an example of watermarked image data;
Fig. 12 schematically illustrates a watermark pattern;
Fig. 13 is a flowchart schematically showing a procedure of the watermark generation process according to a fourth embodiment of the present invention;
Fig. 14 schematically illustrates an example of watermarked image data; and
Fig. 15 schematically illustrates a watermark pattern.

### Mode for Carrying Out the Invention

Various embodiments of the present invention will now be described.

### Digital multifunctional device

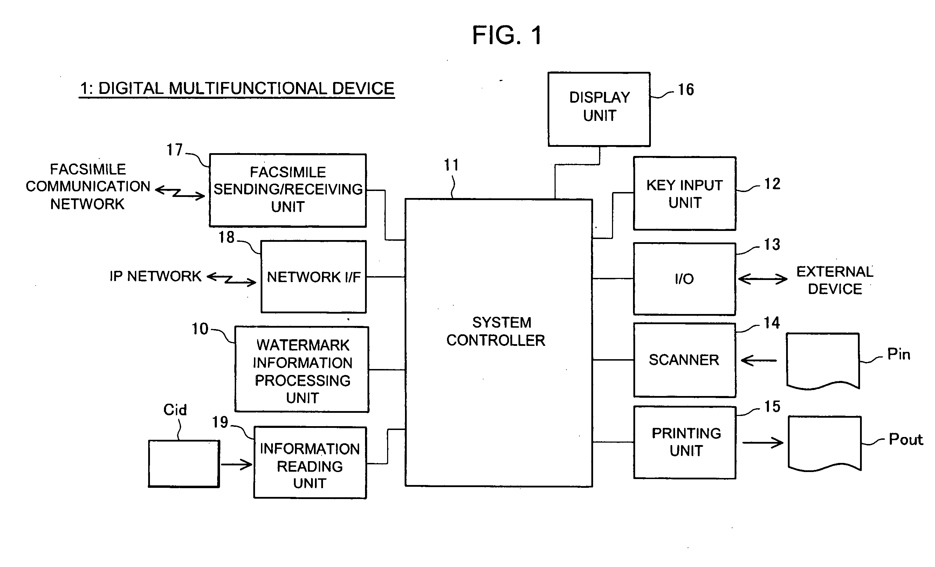

Fig. 1 is a block diagram schematically showing a configuration of a digital multifunctional device according to one embodiment of the present invention. A digital multifunctional device 1 includes a watermark information processing unit 10, a system controller 11, a key input unit 12, an interface (I/O) 13, a scanner 14, a printing unit 15, a display unit 16, a facsimile sending/receiving unit 17, a network interface 18, and an information reading unit 19.

The digital multifunctional device 1 corresponds to an additional information processing system according to the present invention, the watermark information processing unit 10 corresponds to an additional information processing apparatus according to the present invention, each of the facsimile sending/receiving unit 17 and the network interface 18 correspond to both a data sending unit and a data receiving unit according to the present invention.

The digital multifunctional device 1 has functions of copying a document, sending/receiving a facsimile, scanning and printing. The digital multifunctional device 1 connects to an IP network using an internet protocol. Users can carry out an operation of the key input unit 12 equipped with a touch-sensitive panel while viewing window contents on the display unit 16 composed of an LCD, to insert an instruction to copy a document, send a facsimile, receive a facsimile, or perform printing, or to input various settings. Data transmitted via the facsimile communication network is received by the facsimile sending/receiving unit 17, and the received data is outputted to the printing unit 15 via the system controller 11 for printing. The scanner 14 generates image data of a printed medium Pin by optically scanning a surface of the printed medium Pin placed on a read table, and provides the image data to the system controller 11. When copying the printed medium Pin, the system controller 11 executes image processing on the image data read by the scanner 14, converts the processed data into data in a printing format, provides the converted data to the printing unit 15 to cause a copied printed medium Pout to be outputted from the printing unit 15. When sending the printed medium Pin by facsimile, the system controller 11 executes image processing on the image data read by the scanner 14, and provides the processed data to the facsimile sending/receiving unit 17. The facsimile sending/receiving unit 17 further encodes the processed image data and sends the encoded data to a facsimile receiving machine connected to the facsimile communication network.

When the digital multifunctional device 1 is used as a scanner, the system controller 11 executes image processing on the image data read by the scanner 14, and then outputs the processed data to a destination specified by the user, for example, an external device connected to the interface (I/O) 13, a facsimile receiving machine connected to the facsimile communication network, a computer connected to an IP network, or a storage medium (not shown) such as a hard disk.

When the digital multifunctional device 1 is used as a printer, the system controller 11 executes image processing on the image data transferred from the external device connected to the interface (I/O) 13, a computer connected to the IP network, or a storage medium (not shown) such as a hard disk. The system controller 11 further converts the processed data into data in a printing format, and then provides the converted data to the printing unit 15. The image data is outputted as the printed material Pout as a result.

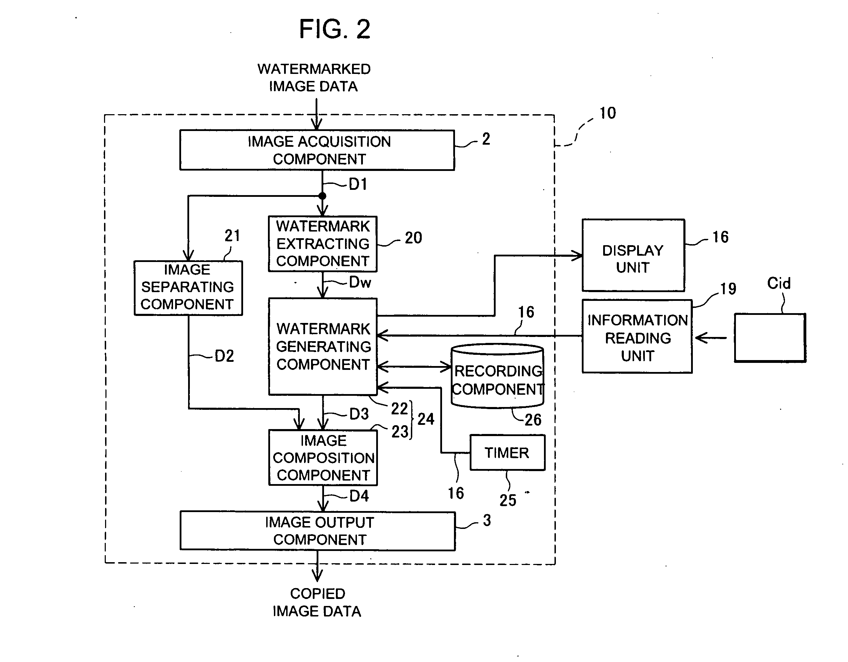

When additional information (digital watermark information) is embedded into image data transferred from an input device such as the scanner 14, the interface (I/O) 13, the facsimile sending/receiving unit 17, or the network interface 18, the system controller 11 provides the transferred image data to the watermark information processing unit 10 for processing, and provides the processing result to a destination specified by the user. Fig. 2 is a block diagram schematically showing a configuration of the watermark information processing unit 10. The watermark information processing unit 10 includes an image acquisition component 2, an image output component 3, a watermark extracting component 20, an image separating component 21, a watermark generating component 22, an image composition component 23, a timer 25 and a recording component 26.

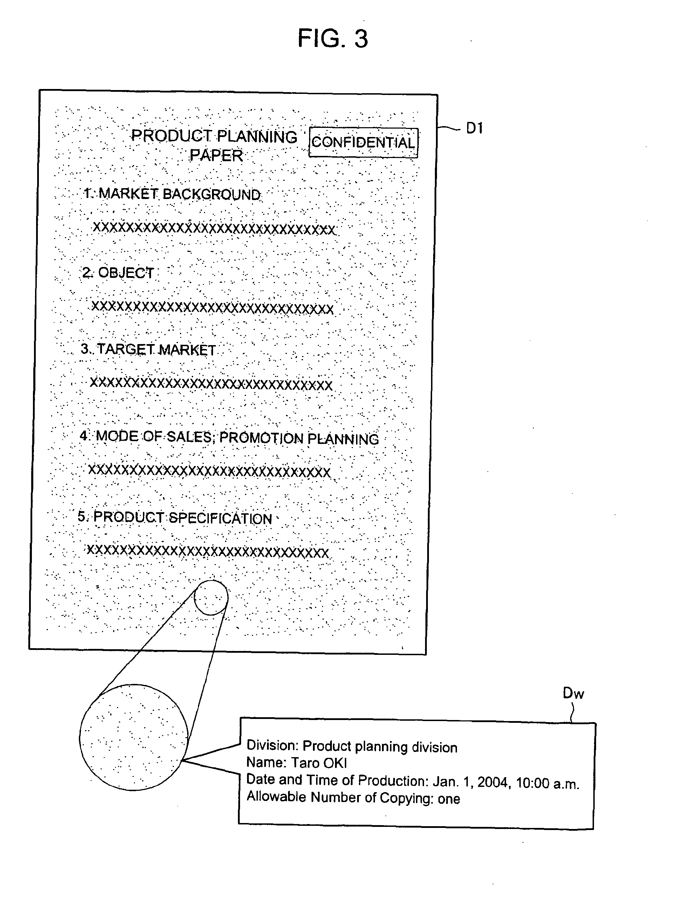

The image acquisition component 2 receives watermarked image data D1 transferred from the system controller 11, and provides the received image data to both the watermark extracting component 20 and the image separating component 21. The watermarked image data D1 shown in Fig. 3 includes a document image (an original image) containing information of "PRODUCT PLANNING PAPER", and further includes digital watermark-data Dw embedded in the document image. The digital watermark data D_{W} illustrated in the drawing as an example contains information regarding "Division: Product planning division", "Name: Taro OKI" of a person who prepared the "PRODUCT PLANNING PAPER", "Date and Time of Production: Jan. 1, 2004, 10:00 a.m." and "Allowable Number of Copying: One". In this embodiment, the digital watermark data Dw can be embedded within the original image by incorporation by reference of a digital watermarking method described in Japanese Patent Application Publication (KOKAI) No. 2003-101762. Specifically, a plurality of wave dot patterns having different two-dimensional spatial frequencies and different wave vectors are prepared. Each of the wave dot patterns has a corresponding resolution of about 8 x 8 pixels, and represents a corresponding symbol of the embedded information. For example, when the embedded information includes symbols of "0", "1" and "2", the dot patterns corresponding to the respective "0", "1" and "2" are prepared. The embedded information, that is, the digital watermark data Dw is converted into a group of dot patterns. A background pattern (hereinafter referred to as a watermark pattern) can be generated by arranging the group of dot patterns in a predetermined order. The watermarked image data D1 in which the digital watermark data Dw is embedded can be generated by superimposing the watermark pattern on the original image. The dot patterns may be composed of binary images with a 2-bit grayscale, or composed of multiple-grayscale images with a 3 or more bit grayscale.

A digital watermarking method according to the present invention is not limited to the method described above. Other digital watermarking methods can be employed. In the present embodiment, the digital watermarking technology is preferably employed. Technologies of a two-dimensional bar-code may be employed instead of the digital watermarking technology. The two-dimensional barcode is a symbol in which symbol characters or its corresponding information units are arranged in vertical and lateral directions. More specifically, the two-dimensional barcode is a pattern that is comprised of the symbol characters or its corresponding information units, each represented by white or black squares (cells) that are arranged in a mosaic pattern or in a matrix. The additional information can be embedded into the original image by adding such a two-dimensional barcode to an area having no document information therein (to an area in which characters or the like are not written).

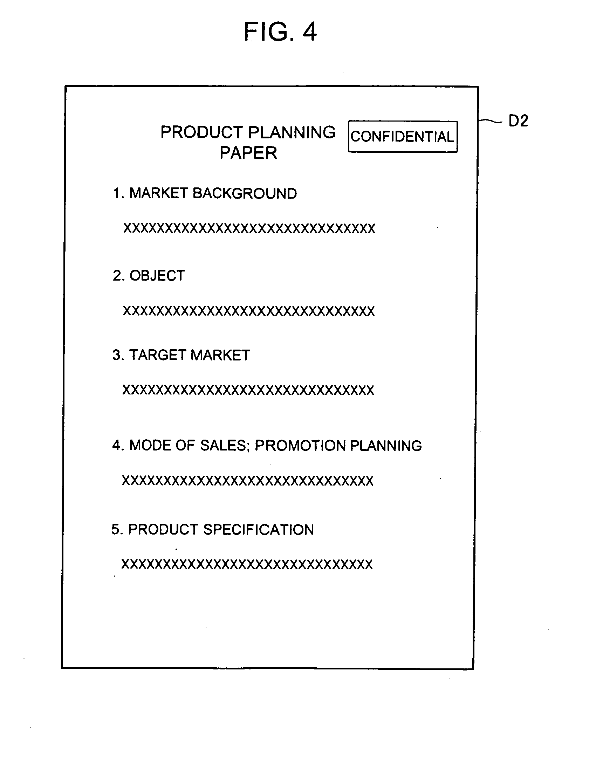

Next, the watermark extracting component 20 extracts the digital watermark data Dw from the watermarked image data D1 and provides the extracted data to the watermark generating component 22. On the other hand, the image separating component 21 removes the watermark pattern of the digital watermark data Dw from the watermarked image data D1 by mask processing to extract original image data D2, and provides the resulting data to the image composition component 23. Fig. 4 schematically illustrates the original image data D2.

The watermark generating component 22 and the image composition component 23 have a function of modifying the contents of the digital watermark data Dw embedded within the watermarked image data D1. The watermark generating component 22 and the image composition component 23 constitutes a watermark modification component (additional information modification component) 24. The watermark generating component 22 determines whether or not the digital watermark data Dw complies with a predetermined condition described later. When determining that the digital watermark data Dw complies with the predetermined condition, the watermark generating component 22 modifies the contents of the digital watermark data Dw to generate new digital watermark data Dw'. The new digital watermark data Dw' is converted into a watermark pattern D3, and the watermark pattern D3 is outputted to the image composition component 23. A detailed processing method for the watermark generating component 22 will be described later. The image composition component 23 generates watermarked image data D4 in which the digital watermark data Dw' is embedded by superimposing the watermark pattern D3 provided by the watermark generating component 22 onto the original image data D2 provided by the image separating component 21. The image composition component 23 provides the watermarked image data D4 to the image output component 3.

In the present embodiment, the digital image data Dw' is embedded into the original image data D2. Alternatively, a method of embedding the digital watermark data Dw' into an area in which the digital watermark data Dw is not embedded within the watermarked image data D1 can be employed. In the alternate method, a process of removing the digital watermark data Dw from the watermarked image data D1 is not necessary, and, hence, it is not necessary to integrate the image separating component 21 in the watermark information processing unit 10. Thus, the alternate method can have an advantage of enabling reduction in circuit scale and reduction in processing.

The image output component 3 provides the watermarked image data D4 to the system controller 11 as copied image data. In the present embodiment, the components 20 to 23 in the watermark information processing unit 10 may be implemented by a digital circuit, or by a group of comments or control program that is to be executed by a microprocessor.

The information reading unit 19 is a device capable of magnetically or optically reading identification data recorded in an identification card Cid, and providing the read identification data to the watermark information processing unit 10 via the system controller 11. The recording component 26 includes a memory group for storing the processed data obtained by the watermark generating component 22. The timer 25 generates time data Dt indicating a date and time, and supplies the time data Dt to the watermark generating component 22.

Procedures of a watermark generation process that is performed by the watermark information processing unit 10 in the digital multifunctional device 1 having the above configuration will now be described.

### First Embodiment

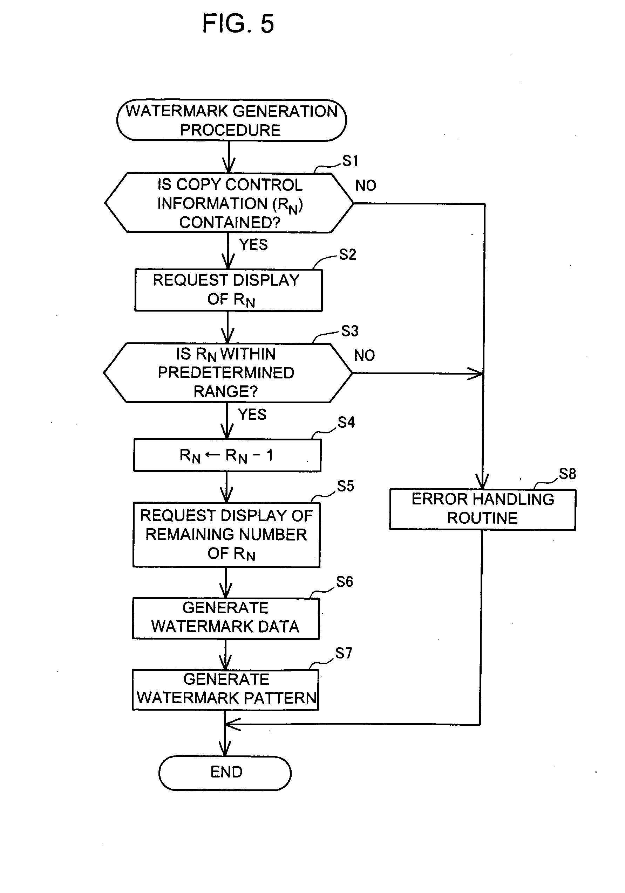

Fig. 5 is a flowchart schematically showing a procedure of a watermark generation process according to a first embodiment. Referring to the flowchart, the watermark generation process will be described below on the basis of the case in which the watermarked image data D1 shown in Fig. 3 is supplied to the watermark information processing unit 10 as an example.

The watermark generating component 22 determines whether or not the copy control information (R_{N}) is contained in the digital watermark data Dw supplied from the watermark extracting component 20 (Step S1). The "allowable number of times of copying" contained in the digital watermark data Dw shown in Fig. 3 is the copy control information. When determining that the digital watermark data Dw does not contain the copy control information, the watermark generating component 22 executes an error handling routine (Step S8), and transfers, to the system controller 11, a command that represents a request for display of a message indicating that copying of the watermarked image data is not allowed. Consequently, a message indicating that copying of the watermarked image data is not allowed is displayed on the display unit 16. After the above-described error handling routine, the watermark generating component 22 ends the process without generating the watermark pattern D3.

On the other hand, when determining that the digital watermark data Dw includes the copy control information in Step S1, the watermark generating component 22 provides, to the system controller 11, a command as the copy control information that represents a request for display of the allowable number of times of copying R_{N} (Step S2). Consequently, the display unit 16 displays that the allowable number of times of copying is R_{N} times.

Subsequently, whether or not the allowable number of times of copying R_{N} is within a predetermined range (one or more) is determined (Step S3). When the allowable number of times of copying R_{N} is out of the predetermined range (smaller than one), the error handling routine (Step S8) is executed, so that a command which requests display of a message indicating that the copying of the watermarked image data is not allowed is transferred to the system controller 11 and the display unit 16 displays that message.

On the other hand, when the watermark extracting component 20 determines in Step S3 that the allowable number of times of copying R_{N} is within the predetermined range, that is, when the watermark extracting component 20 determines in Step S3 that the copy control information contains a variable (=1) representing permission to copy the watermarked image data D1, the value of the allowable number of times of copying R_{N} is decremented by "1" (Step S4). Subsequently, a command is provided to the system controller 11, which represents a request for display of a massage indicating that the remaining number of the allowable number of times of copying R_{N} is "zero" for the watermarked image data D1 (Step S5). Consequently, the display unit 16 displays the remaining number of the allowable number of times of copying.

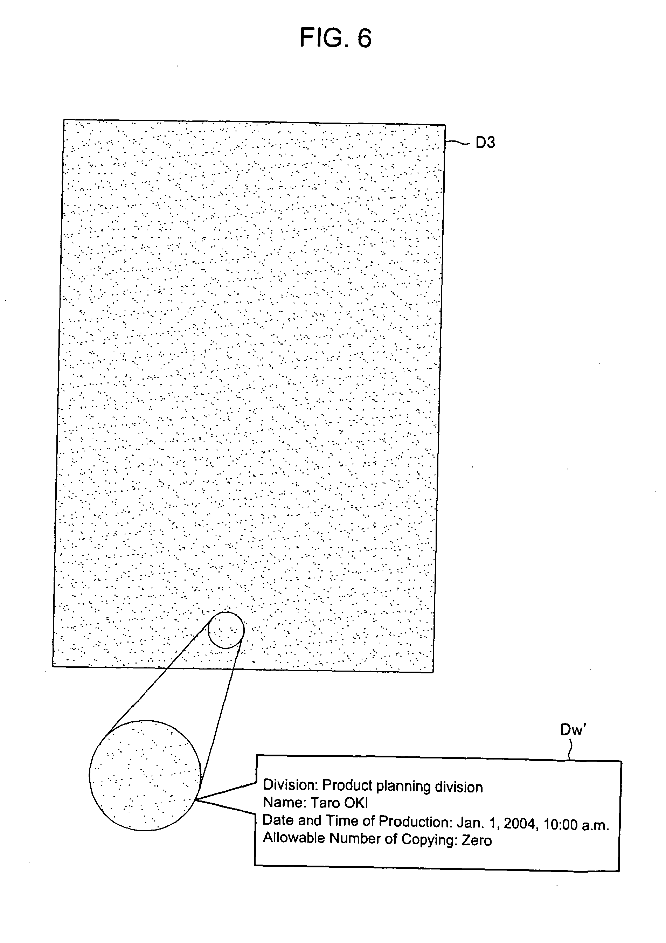

Subsequently, the watermark generating component 22 generates new digital watermark data Dw' containing the modified allowable number of times of copying R_{N} (Step S6), generates the watermark pattern D3 from the digital watermark data Dw' (Step S7), and provides the generated watermark pattern D3 to the image composition component 23. Fig. 6 schematically illustrates the watermark pattern D3. This watermark pattern D3 is obtained by encoding the digital watermark data Dw' containing the allowable number of times of copying R_{N} that was modified from one to zero. The watermark generation process is then ended.

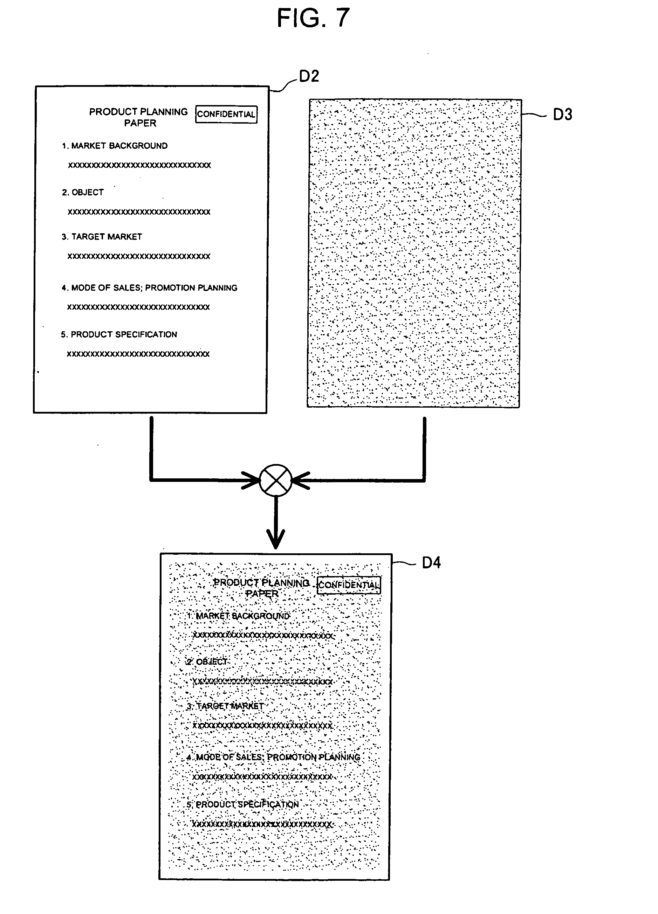

Thereafter, as shown in Fig. 7, the image composition component 23 generates copied image data D4 by superimposing the watermark pattern D3 onto the original image data D2 supplied from the image separating component 21, and provides the copied image data D4 to the system controller 11 via the image output component 3.

In the watermark generation process according to the first embodiment, the digital watermark data Dw containing the copy control information described above is embedded within the image data. The watermarked image data D1 is allowed to be copied only when the copy control information R_{N} is within the predetermined range. Further, the digital watermark data Dw' containing the modified copy control information is embedded into the copied image data. Therefore, the allowable number of times of copying the watermarked image data can be reliably limited to prevent illegal copying.

### Second Embodiment

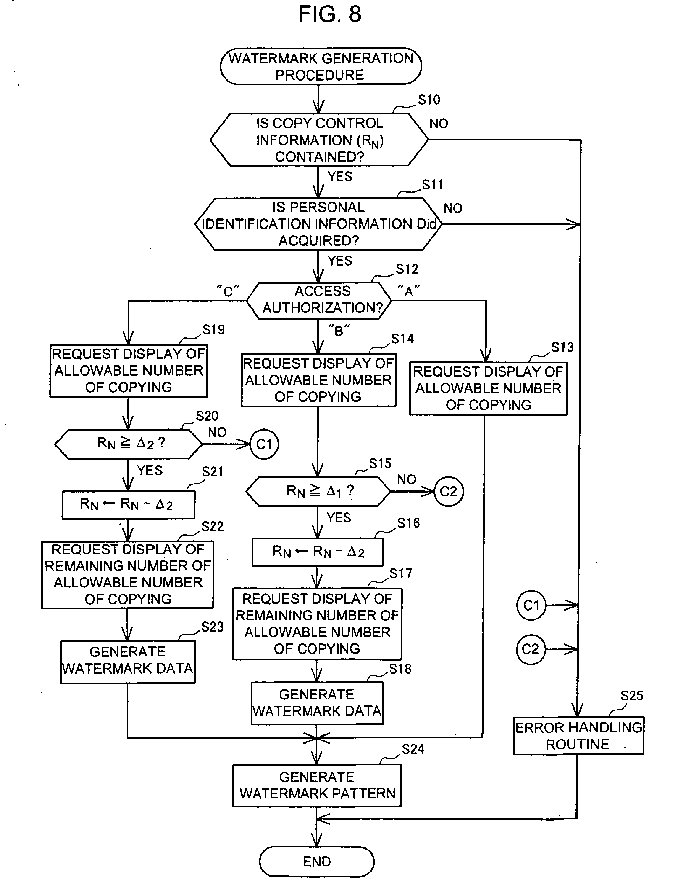

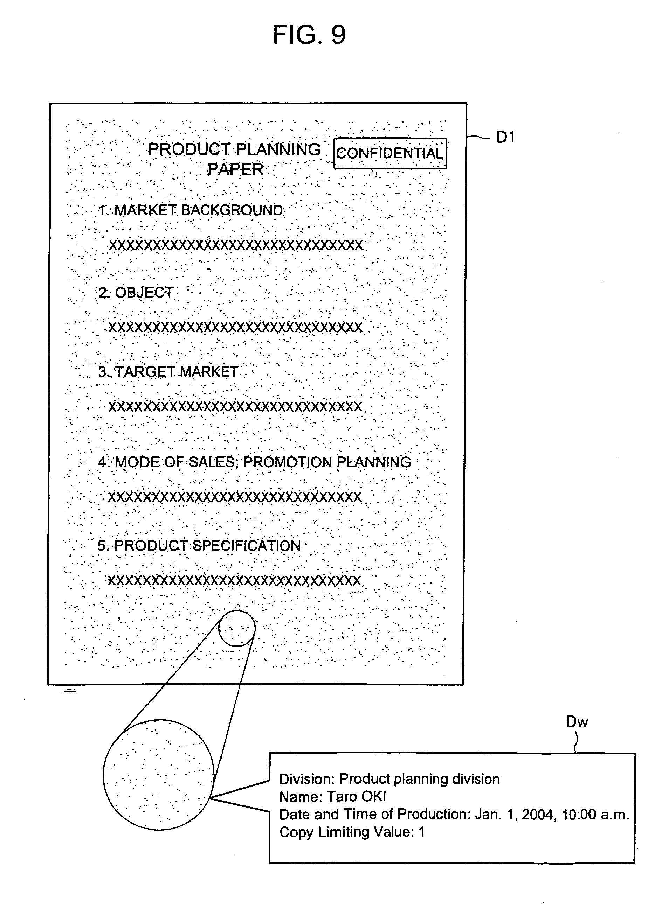

Fig. 8 is a flowchart schematically showing a procedure of a watermark generation process according to a second embodiment. Referring to the flowchart, the watermark generation process will be described below on the basis of the case in which the watermarked image data D1 shown in Fig. 9 is supplied to the watermark information processing unit 10 as an example. The watermarked image data D1 shown in Fig. 9 contains digital watermark data Dw having information of "Division: Product planning division", "Name: Taro OKI" of a person who prepared the "PRODUCT PLANNING PAPER", "Date and Time of Production: Jan. 1, 2004, 10:00 a.m." and "Copy Limiting Value: 1".

In an operation mode in the present embodiment, a user needs to insert an identification card Cid into the information reading unit 19 shown in Fig. 1 in order to give an instruction to copy the watermarked image data D1. The information reading unit 19 reads personal identification information Did recorded in the user's identification card Cid, and supplies the read information to the watermark information processing unit 10 via the system controller 11. The personal identification information Did contains information indicating access authorization to use the digital multifunctional device 1. In this embodiment, a highest level of the access authorization is represented by "A", an intermediate level of the access authorization is represented by "B", and a lowest level of the access authorization is represented by "C".

Referring now to Fig. 8, the watermark generating component 22 determines whether or not the copy control information or copy limiting value R_{N} is contained in the digital watermark data Dw supplied from the watermark extracting component 20 (Step S10). When determining that digital watermark data Dwg does not contain the copy control information, the watermark generating component 22 executes an error handling routine (Step S25) to cause the display unit 16 to display a message indicating that copying of the watermarked image data is not allowed in the same manner as in Step S8 described above, and then ends the watermark generation process.

On the other hand, in Step S10, when determining that the digital watermark data Dwd contains the copy control information, the watermark generating component 22 determines whether or not identification data Did can be acquired or not (Step S11). When determining that the identification data Did cannot be acquired, the watermark generating component 22 executes the error handling routine (Step S25) to cause the display unit 16 to display a message indicating that the copy of the watermarked image data is not allowed, and then ends the watermark generation process.

On the other hand, in the step S11, when determining that the identification data Did can be acquired, the watermark generating component 22 determines which level of the user's access authorization of the levels "A", "B" and "C" is contained within the identification data Did (Step S12).

When it is determined that the access authorization is at the highest level "A", the watermark generating component 22 issues a request for display to the system controller 11 to cause the display unit 16 to display a message indicating that the access authorization and the allowable number of times of copying are not limited (Step S13). The watermark pattern D3 is then generated based on the digital watermark data Dw' which is the same as the digital watermark data Dw supplied from the watermark extracting component 20, and the watermark pattern D3 is provided to the image composition component 23 (Step S24). Consequently, the image composition component 23 provides the copied image data D4 which is the same as the watermarked image data D1 supplied from the system controller 11. In this manner, when the level of the access authorization is equal to or higher than a predetermined level, the copying of the watermarked image data D1 is allowed without limitation irrespective of the copy control information (R_{N}).

In the above-described step S12, when it is determined that the access authorization is at the intermediate level "B", the watermark generating component 22 issues a request for display to the system controller 11 to cause the display unit 16 to display a massage indicating the level of the access authorization, and a message indicating that the allowable number of times of copying is [R_{N}/Δ₁] times (Step S14). The sign [x] designates a function that returns a maximum integer which does not exceed the input value x, and Δ₁ designates a step width where Δ₁=0.5. In the case of the watermarked image data D1 shown in Fig. 9, the allowable number of times of copying is two times (=[1/0.5]). Subsequently, whether or not the copy limiting value R_{N} is within a predetermined range (Δ₁ or larger) is determined (Step S16). When it is determined that the copy limiting value R_{N} is out of the predetermined range (smaller than Δ₁), the watermark generating component 22 executes an error handling routine (step S25) to cause the display unit 16 to display the message indicating that the copy of the watermarked image data is not allowed in the same manner as the process in the Step S8 described above.

On the other hand, in the Step S15, when it is determined that the copy limiting value R_{N} is within the predetermined range (Δ₁ or larger), that is, when it is determined that the copy control information contains the variable value R_{N} representing permission to copy the watermarked image data D1, the copy limiting value R_{N} is decremented by the step width Δ₁ (=0.5) (Step S16). The watermark generating component 22 then issues a request for display to the system controller 11 to cause the display unit 16 to display a message indicating that the remaining number of the allowable number of times to copy the watermarked image data D1 is one time (=[0.5/0.5]) (Step S17).

Subsequently, the watermark generating component 22 generates new digital watermark data Dw' containing the modified copy limiting value R_{N} (=0.5), further generates a watermark pattern D3 based on the digital watermark data Dw' (Step S24), and provides the watermark pattern D3 to the image composition component 23.

When it is determined that the access authorization is at the lowest level "C" in the Step S12 described above, the watermark generating component 22 issues a request for display to the system controller 11 to cause the display unit 16 to display a message indicating the level of the access authorization and a message indicating that the allowable number of times of copying is [R_{N}/Δ₂] times (where Δ₂ designates a step width; Δ₂=1) (Step S19). In the case of the watermarked image data D1 shown in Fig. 9, the allowable number of times of copying is one time (=[1/1]). Subsequently, whether or not the copy limiting value R_{N} is within the predetermined range (Δ₂ or larger) is determined (Step S20). When it is determined that the copy limiting value R_{N} is out of a predetermined range (Δ₂ or smaller), the watermark generating component 22 executes the error handling routine (Step S25) to cause the display unit 16 to display a message indicating that the copy of the watermarked image data is not allowed, in the same manner as the procedure in the Step S8.

On the other hand, when it is determined that the copy limiting value R_{N} is within the range of the predetermined range (Δ₂ or larger) in the Step S20, that is, when it is determined that the copy control information contains the variable value R_{N} representing permission to copy the watermarked image data D1, the value of the copy limiting value R_{N} is decremented by the step width Δ₂ (=1) (Step S21). Subsequently, in the same manner as the Step S5, the watermark generating component 22 issues a request for display to the system controller 11 to cause the display unit 16 to display a message indicating that the remaining allowable number of times to copy the watermarked image data D1 is "zero" (=[0/1]) (Step S22).

Subsequently, the watermark generating component 22 generates new digital watermarked data Dw' containing the modified copy limiting value R_{N} (=0) (Step S23), further generates a watermark pattern D3 based on the digital watermark data Dw' (Step S24), and provides the watermark pattern D3 to the image composition component 23. The watermark generation process of the present embodiment is then ended.

In the watermark generation process according to the second embodiment described above, whenever the watermarked image data D1 is copied, the copy limiting value R_{N} is modified by a smaller step width with a higher level of the access authorization of the user, and the copy limiting value R_{N} is modified by a larger step width with a lower level of the access authorization of the user (Steps S16, S21). When the level of the access authorization of the user is the predetermined level or higher, the copy limiting value R_{N} is modified, and the copying is then allowed without limitation (Steps S13, S24). Therefore, the allowable number of times of copying can be limited in accordance with the access authorization of the user.

### Third Embodiment

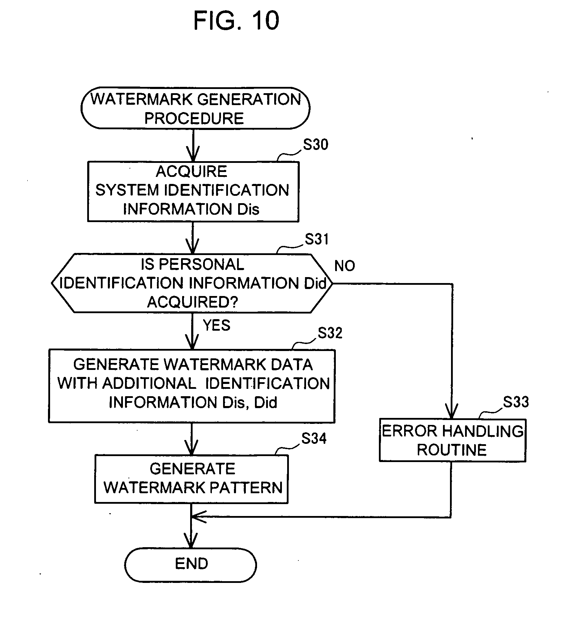

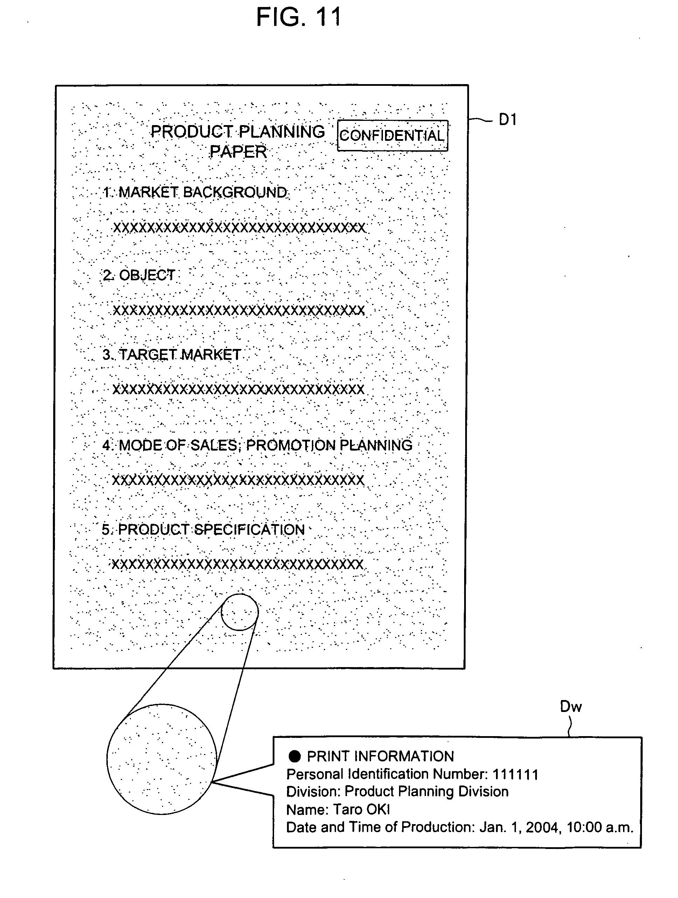

Fig. 10 is a flowchart schematically showing a procedure of a watermark generation process according to a third embodiment. Referring now to the flowchart, the watermark generation process will be described on the basis of the case in which the watermarked image data D1 shown in Fig. 11 is supplied to the watermark information processing unit 10 as an example. The watermarked image data D1 shown in Fig. 11 contains information of "Personal Identification Number: 111111", "Division: Product Planning Division", "Name: Taro OKI" of a person who prepared the "PRODUCT PLANNING PAPER", and "Date and Time of Production: Jan. 1, 2004, 10:00 a.m."

In an operation mode in the present embodiment, in order to give an instruction to copy the watermarked image data D1, a user needs to insert an identification card Cid into the information reading unit 19 shown in Fig. 1, and needs to input, into the watermark information processing unit 10, the user's personal identification information Did recorded in the identification card Cid. The information reading unit 19 supplies the personal identification information Did read from the identification card Cid to the watermark information processing unit 10 via the system controller 11.

Referring now to Fig. 10, the watermark generating component 22 acquires, from the system controller 11, system identification information Dis that is unique information assigned to the digital multifunctional device 1 (Step S30). A unique number recorded in a memory such as a mask ROM at the time of shipping of the digital multifunctional device 1 can be used as the system identification information Dis. A MAC address (Media Access Control Address) assigned to the network interface 18 can be also used as the system identification information Dis.

Subsequently, the watermark generating component 22 determines whether or not the personal identification information Did can be acquired (Step S31). When determining that the personal identification information Did cannot be acquired, the watermark generating component 22 executes an error handling routine (Step S33), and then issues a request for display to the system controller 11 to cause the display unit 16 to display a message indicating that copying of the watermarked image data D1 is not allowed. The watermark generation process is then ended.

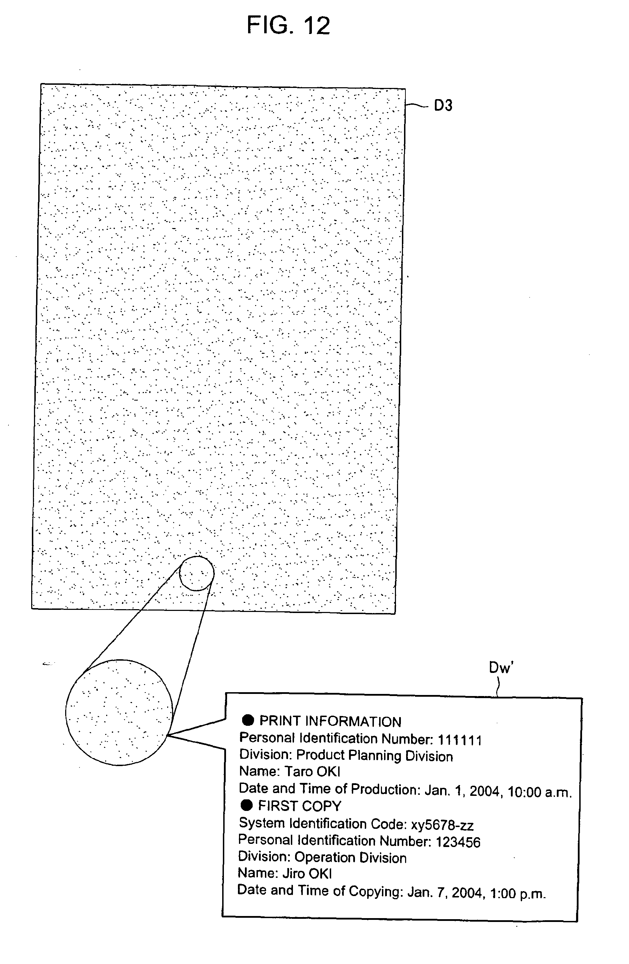

On the other hand, when determining that the personal identification information Did is acquired in the Step S31, the watermark generating component 22 adds both of the personal identification information Did and the system identification information Dis to the digital watermark data Dw before copying, thereby to generate new digital watermark data Dw' (Step S32). The watermark generating component 22 further generates a watermark pattern D3 based on the digital watermark data Dw' (Step S34), and provides the watermark pattern D3 to the image composition component 23. The watermark generation process is then ended. Fig. 12 schematically illustrates the watermark pattern D3 within which the digital watermark data Dw' is embedded. The digital watermark data Dw' includes information representing the number of times of copying ("first copy"), "Personal Identification Number: 123456" of personal identification information Did, "Division: Operation Division" and "Name: Jiro OKI" of the person who copies, "System Identification code: xyz5678-zz" of the system identification information Dis, and "Date and Time of Copying: Jan. 7, 2004 1:00 p.m.", in addition to the digital watermark data Dw before copying. The "Date and Time of copying" is provided on the basis of time data Dt supplied from the timer 25.

In the watermark generation process according to the third embodiment, since the personal identification information Did of the person who copies, and the system identification information Dis which is unique information assigned to the machine used for the copying are embedded into the copied image data each time when the watermarked image data D1 is copied, a record of copy events can be easily and reliably traced back. Therefore, even when the contents of the confidential document are leaked, the person who leaked or the place of the leaks can be easily specified.

### Fourth Embodiment

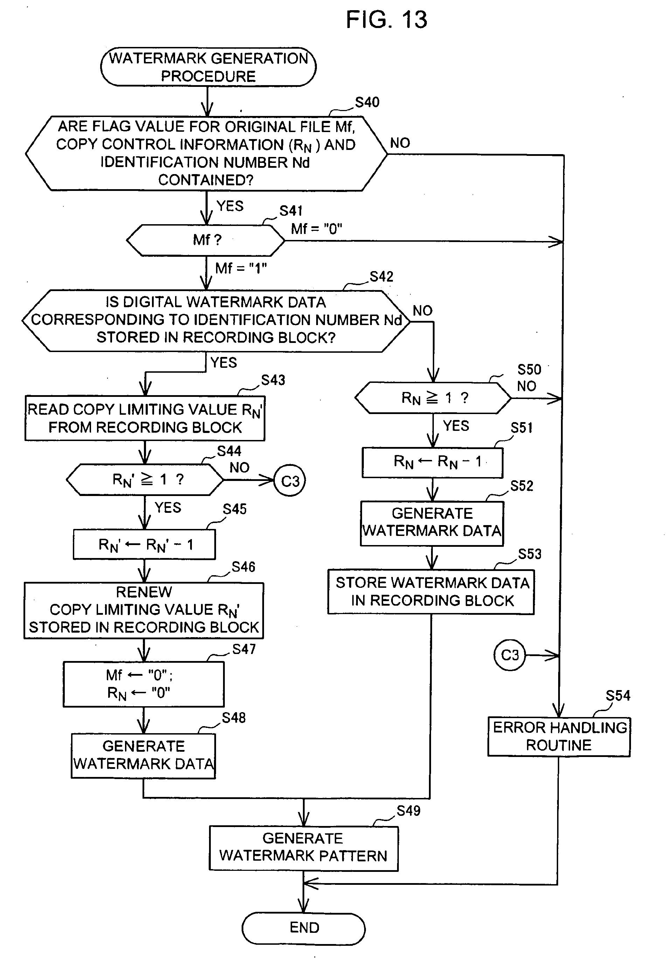

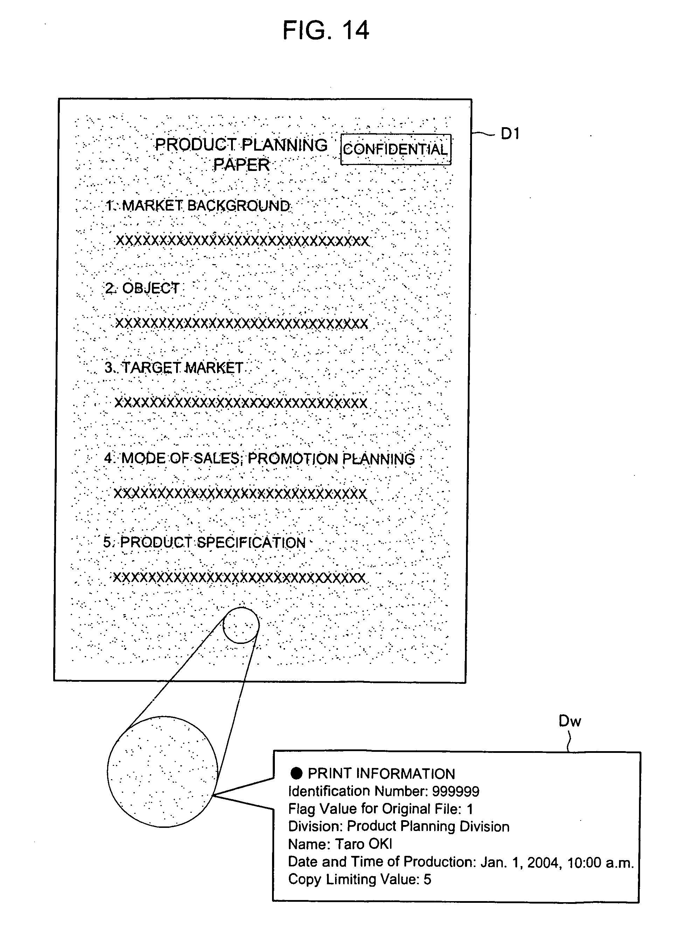

Fig. 13 is a flowchart schematically showing a procedure of a watermark generation process according to a fourth embodiment of the present invention. Referring to this flowchart, a watermark generation process will be described on the basis of the case in which watermarked image data D1 shown in Fig. 14 is supplied to the watermark information processing unit 10 as an example. The watermarked image data D1 shown in Fig. 14 includes digital watermarked data Dw containing information of "Identification Number: 999999", "Flag Value for Original File: 1", "Division: Product Planning Division", "Name: Taro OKI", "Date and Time of Production: Jan. 1, 2004, 10:00 a.m." and "Copy Limiting Value: 5". The "Identification Number" is a unique identifiable number assigned to the watermarked image data D1. The "Flag Value for Original File" is either "0" or "1". When the original text-flag value is "1", the watermarked image data D1 represents an original file. When the flag value is "0", the watermarked image data D1 represents the copied image data other than the original file.

Referring now to Fig. 13, the watermark generating component 22 determines whether or not a flag value for original file Mf, the copy control information (R_{N}), and an identification number Nd are contained in the digital watermark data Dw that is supplied from the watermark extracting component 20 (Step S40). When it is determined that none of the flag value for original file Mf, the copy control information (R_{N}), and the identification number Nd are contained in the digital watermark data Dw, the watermark generating component 22 executes an error handling routine (Step S54) to cause the display unit 16 to display a message indicating that copying of the watermarked image data is not allowed. The watermark generation process is then ended.

On the other hand, when it is determined that all the flag value for original file Mf, the copy control information (R_{N}), and the identification number Nd are contained in the digital watermark data Dw in the Step S40 described above, the watermark generating component 22 determines which of "0" or "1" the flag value for original file Mf is (Step S41). When the flag value Mf is "0", it is determined that the watermarked image data D1 is copied data, and hence the watermark generating component 22 executes the error handling routine (Step S54) to cause the display 16 to display a message indicating that copying of the watermarked image data is not allowed, and ends the watermark generation process.

On the other hand, when the flag value for original file Mf is "1", the watermark generating component 22 determines that the watermarked image data D1 is an original file, and proceeds to Step S42. In Step S42, the watermark generating component 22 refers to the recording component 26, and determines whether the digital watermark data corresponding to the identification number Nd is stored in the recording component 26. When it is determined that the digital watermark data is not stored in the recording component 26, the watermark generating component 22 determines whether or not the copy limiting value R_{N} is within the predetermined range (1 or larger)

(Step S50).

When it is determined that the copy limiting value R_{N} is out of the predetermined range (smaller than 1) in the Step S50, the watermark generating component 22 executes the error handling routine (Step S54) to cause the display unit 16 to display a massage indicating that copying of the watermarked image data is not allowed, and then ends the watermark generation process. On the other hand, when it is determined that the copy limiting value R_{N} is within the predetermined range (one or higher) in the Step S50, in other words, when it is determined that the copy control information contains the variable value R_{N} representing permission to copy the watermarked image data D1, the watermark generating component 22 decrements the copy limiting value R_{N} by "1" (Step S51). Thereafter, new digital watermark data Dw' containing the modified copy limiting value R_{N} is generated (Step S52), and the digital watermark data Dw' is stored in the recording component 26 (Step S53).

Subsequently, the watermark generating component 22 generates a watermark pattern D3 based on the digital watermark data Dw' that was generated in Step S52, provides the generated watermark pattern D3 to the image composition component 23, and ends the watermark generation process.

When it is determined that the digital watermark data is stored in the recording component 26 in Step S42, the watermark generating component 22 reads out the copy limiting value R_{N}' stored in the recording component 26 (Step S43), and determines whether or not the copy limiting value R_{N}' is within the predetermined range (one or larger) (Step S44). When it is determined that the copy limiting value R_{N}' is out of the predetermined range (smaller than one), the watermark generating component 22 executes the error handling routine (Step S54) to cause the display unit 16 to display a message indicating that copying of the watermarked image data D1 is not allowed, and then ends the watermark generation process.

When it is determined that the copy limiting value R_{N}' is within the predetermined range (one or larger) in the Step S44, that is, when it is determined that the copy control information contains the variable value R_{N}' representing permission to copy the watermarked image data D1, the watermark generating unit 22 decrements the copy limiting value R_{N}' by "1" (Step S45), and then renews the copy limiting value R_{N}' stored in the recording component 26 to the new value (Step S46).

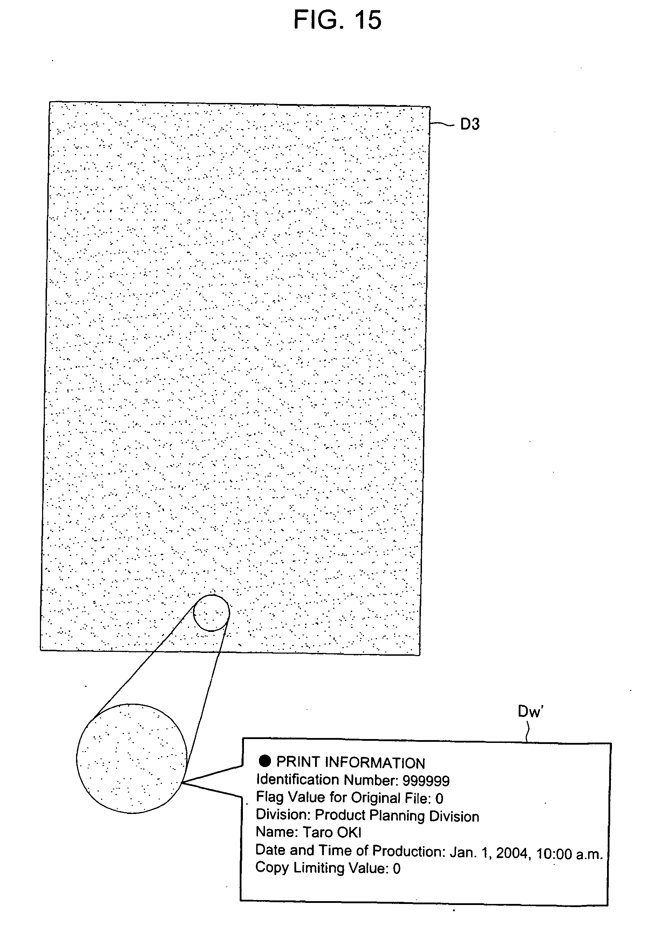

Subsequently, the watermark generating component 22 modifies the flag value for original file Mf from "1" to "0", and the copy limiting value R_{N} from "5" to "0" (Step S47). The watermark generating component 22 generates new digital watermark data Dw' containing both the modified flag value for original file Mf and the copy limiting value R_{N} (Step S48), generates a watermark pattern D3 based on the digital watermark data Dw' (Step S49), and provides the watermark pattern D3 to the image composition component 23. Fig. 15 schematically shows the watermark pattern D3. The watermark generation process of the present embodiment is then ended.

In the watermark generation process according to the fourth embodiment, copying of the original file can be allowed, and copying of the copied data other than the original file cannot be allowed. In addition, the allowable number of times the original file is copied can be limited to prevent illegal copy.

It is understood that the foregoing description and accompanying drawings set forth the preferred embodiments of the invention at the present time. Various modifications, additions and alternatives will, of course, become apparent to those skilled in the art in light of the foregoing teachings without departing from the spirit and scope of the disclosed invention. Thus, it should be appreciated that the invention is not limited to the disclosed embodiments but may be practiced within the full scope of the appended claims.

This application is based on Japanese Patent Application No. 2004-33326 which is hereby incorporated by reference.

## Claims

1. An additional information processing apparatus comprising:
an image acquisition component which acquires input image data in which additional information is embedded;
an extracting component which extracts the additional information from the input image data; and
an additional information modification component which generates new additional information by modifying the additional information when determining that the additional information complies with a predetermined condition, and generates copied image data by embedding the new additional information into the input image data or image data obtained by removing the additional information from the input image data.

2. The additional information processing apparatus according to Claim 1, wherein:
said additional information contains copy control information for limiting an allowable number of times the input image data is copied; and
when determining that the copy control information contains a variable value representing permission to copy the input image data, said additional information modification component generates the new additional information by modifying the variable value and generates the copied image data.

3. The additional information processing apparatus according to Claim 2, wherein said additional information modification component determines that the copy control information contains the variable value representing permission to copy the input image data when the variable value is within a predetermined range.

4. The additional information processing apparatus according to Claim 2 or 3, wherein said additional information modification component modifies the variable value by a smaller amount with a higher level of access authorization of a user, and modifies the variable value by a larger amount with a lower level of the access authorization level of a user.

5. The additional information processing apparatus according to any one of Claims 2 to 4, further comprising a recording component which stores the additional information extracted by said extracting component, wherein:
when determining that the additional information contains a flag value representing image data of an original file and the same additional information is not stored in said recording component, said additional information modification component generates the new additional information to write the generated new additional information into the recording component and generates the copied image data;
when determining that the additional information contains a flag value representing the image data of an original file and that the same additional information is stored in said recording component, said additional information modification component modifies the variable value that is contained within the additional information stored in said recording component, and generates the new additional information and the copied image data; and
when determining that the additional information contains a flag value not representing the image data of an original file, said additional information modification component does not generate the copied image data.

6. The additional information processing apparatus according to any one of Claims 1 to 5, wherein, when determining that the additional information contains a flag value representing image data of an original file, said additional information modification component generates the new additional information by changing the flag value to a value not representing image data of an original file, and generates the copied image data.

7. The additional information processing apparatus according to any one of Claims 1 to 6, wherein, when determining that a level of access authorization of a user is equal to or larger than a predetermined level, said additional information modification component can provide the copied image data having the same additional information as that of the input image data, without generating the new additional information.

8. The additional information processing apparatus according to any one of Claims 1 to 7, wherein said additional information modification component generates the new additional information by adding personal identification information of a user to the additional information.

9. The additional information processing apparatus according to any one of Claims 1 to 8, wherein said additional information modification component generates the new additional information by adding identification information of a system to the additional information, said additional information processing apparatus is integrated in said system.

10. An additional information processing system comprising:
an additional information processing apparatus according to any one of Claims 1 to 9;
a scanner which obtains the input image data by optically scanning a printed medium in which the additional information is embedded; and
a printer which prints out the copied image data.

11. The additional information processing system according to Claim 10, further comprising a data receiving unit which receives image data transmitted through a communication line and provides the received image data to the image acquisition component.

12. The additional information processing system according to Claim 10 or Claim 11, further comprising a data sending unit which sends the copied image data to said communication line.

13. The additional information processing system according to any one of Claims 10 to 12, further comprising a display unit which displays one or both of the additional information extracted by said extracting component and the new additional information.

14. An additional information processing system comprising:
an additional information processing apparatus according to Claim 8; and
an information reading unit which reads personal identification information from a recording medium storing the personal identification information of a user, and provides the read personal identification information to said additional information processing apparatus.

15. An additional information processing system comprising:
an additional information processing apparatus according to Claim 4 or Claim 7; and
an information reading unit which reads access authorization from a recording medium storing the access authorization of a user, and provides the read access authorization to said additional information processing apparatus.

16. An additional information processing method comprising the steps of:
(a) acquiring input image data in which additional information is embedded;
(b) extracting the additional information from the input image data;
(c) determining whether or not the extracted additional information complies with a predetermined condition; and
(d) generating new additional information by modifying the additional information when it is determined in said step (c) that the additional information complies with said predetermined condition, and generating copied image data by embedding the new additional information into the input image data or image data obtained by removing the additional information from the input image data.
